# DEMANDE DE BREVET EUROPEEN

(11) **EP 1 056 189 A1**
(43) Date de publication de la demande: **29.11.2000**
(21) Numéro de dépôt: 00401497.3
(22) Date de dépôt: 26.05.2000
(51) Int. Cl.: H02M 5/22

(54) **Procédé et dispositif pour l'alimentation, avec isolation galvanique, d'un appareil électrique en une très basse tension de sécurité**

(30) Priorité: 28.05.1999 FR 9907137
(71) Demandeur: PTC, 93500 Pantin (FR)
(72) Inventeur: Odille, Eric, 78170 La Celle Saint Cloud (FR); Legrand, Serge, 77178 Saint Pathus (FR)
(74) Mandataire: de Saint-Palais, Arnaud Marie

(57) **Abrégé**

Le dispositif pour la mise en oeuvre du procédé selon l'invention comprend un redresseur à correcteur de facteur de puissance (2), un onduleur (3) qui convertit la tension de sortie du redresseur (2) en une tension alternative à la fréquence nominale du moteur (1), un transformateur (4) dont le secondaire est connecté aux bornes du moteur (1).

L'invention s'applique notamment à l'alimentation d'une aiguille vibrante.

## Description

L'invention a pour objet un procédé et un dispositif pour l'alimentation, avec isolation galvanique, d'un appareil électrique en une très basse tension de sécurité à partir d'une source pouvant consister en le réseau de distribution de courant électrique.

Elle concerne plus particulièrement, mais non exclusivement, un procédé et un dispositif pour l'alimentation d'une aiguille vibrante électrique du type de celles qui sont couramment utilisées pour la vibration du béton.

Habituellement, l'alimentation des aiguilles vibrantes en énergie électrique s'effectue à très basse tension de sécurité de 42 à 48 volts, à une fréquence de 200 Hz, ce qui permet avec un moteur asynchrone triphasé comportant une paire de pôles, d'obtenir une vitesse de rotation voisine de 12 000 tr/mn et donc une fréquence vibratoire également voisine de 12 000 Hz.

Pour obtenir ce résultat, on utilise un groupe convertisseur comprenant un moteur entraînant un alternateur. Le circuit à 200 Hz se trouve complètement séparé galvaniquement du réseau d'alimentation et la sécurité des travailleurs est pleinement assurée. Néanmoins, ce système présente l'inconvénient d'être relativement lourd et encombrant.

Il existe également sur le marché des aiguilles vibrantes qui utilisent un convertisseur électronique. Sur ces aiguilles, la tension monophasée du réseau électrique est transformée en tension continue par un redresseur. Cette tension continue est ensuite convertie en tension alternative triphasée par un onduleur électronique. Il en résulte que le moteur de l'aiguille n'est plus alimenté en très basse tension de sécurité et qu'il n'y a plus de séparation galvanique entre le réseau et le moteur. De ce fait, si, par inadvertance, un câble se trouve dénudé, l'opérateur peut être mis en contact avec une tension dangereuse pour sa sécurité.

Pour remédier à cet inconvénient et obtenir une très basse tension de sécurité, il a été envisagé en repartant du réseau triphasé, d'intercaler un transformateur de séparation de circuit délivrant sur son secondaire une très basse tension de sécurité qui est redressée et qui, à travers un onduleur électronique, alimente le moteur électrique de l'aiguille. Ce dispositif apporte la même sécurité que le convertisseur tournant. Toutefois, en raison de l'usage d'un transformateur pour courant alternatif 50 Hz, il présente un même handicap de poids.

De plus, si l'on veut utiliser une tension réseau monophasée, le circuit de redressement du courant engendre un taux d'harmoniques qui dépasse le seuil fixé par les normes en vigueur, qui s'accompagne d'un très mauvais facteur de puissance.

L'invention a donc plus particulièrement pour but de pallier les défauts précédemment évoqués.

En vue d'obtenir ce résultat, le procédé selon l'invention comprend les phases opératoires successives suivantes :
- Le redressement de la tension alternative du réseau en une première tension continue au moyen d'un circuit redresseur à correction du facteur de puissance qui utilise un hacheur fonctionnant à une fréquence de découpage relativement élevée.
- La conversion de cette première tension continue en une tension alternative intermédiaire,
- La transformation de cette tension alternative intermédiaire en une très basse tension alternative de sécurité, apte à assurer l'alimentation de l'aiguille vibrante.

Avantageusement, les susdits moyens de conversion pourront consister en un onduleur, la susdite transformation s'effectuant alors à l'aide d'un transformateur.

Toutefois, en alternative, et dans le but d'alléger le circuit (poids du transformateur), ces moyens de conversion pourront être conçus de manière à exécuter les opérations successives suivantes :
- le découpage de la susdite première tension continue de manière à obtenir une tension alternative intermédiaire à une fréquence égale à la susdite fréquence de découpage,
- la transformation de cette tension intermédiaire en une tension alternative secondaire dont le niveau correspond à celui d'une très basse tension de sécurité,
- le redressement de cette tension alternative secondaire en une très basse tension continue de sécurité.

Dans ce cas, cette très basse tension continue de sécurité est convertie par un onduleur en une très basse tension alternative de sécurité, apte à assurer l'alimentation de l'aiguille vibrante.

Grâce à ces dispositions, on obtient donc à partir de la tension du réseau, une très basse tension de sécurité avec un excellent coefficient de transfert de puissance et une isolation galvanique garantissant la sécurité de l'utilisateur.

En outre, du fait que la conversion de la tension alternative intermédiaire en une très basse tension de sécurité s'effectue à une fréquence plus élevée que celle du réseau, le transformateur utilisé présente un poids réduit.

Des modes d'exécution de l'invention seront décrits ci-après, à titre d'exemples non limitatifs, avec référence aux dessins annexés dans lesquels :
La figure 1 est un schéma-blocs d'un dispositif pour la mise en oeuvre d'une première variante du procédé selon l'invention ;
La figure 2 est un schéma de principe d'un circuit redresseur à correction du facteur de puissance utilisé dans le dispositif représenté figure 1 ;
Les figures 3 et 4 sont deux variantes d'exécution de l'onduleur utilisé pour engendrer la tension alternative intermédiaire servant à alimenter le transformateur auquel l'aiguille vibrante est raccordée ;
La figure 5 est un schéma-blocs d'un dispositif pour la mise en oeuvre d'une seconde variante du procédé selon l'invention ;
Les figures 6 à 8 sont des schémas de principe de circuits à découpage PWM de type "Forwards" (Fig. 6), à demi-pont (Fig. 7) et à pont complet (Fig. 8) ;
Les figures 9 et 10 sont deux variantes d'exécution de l'onduleur utilisé pour engendrer la très basse tension alternative de sécurité servant à alimenter l'aiguille vibrante.

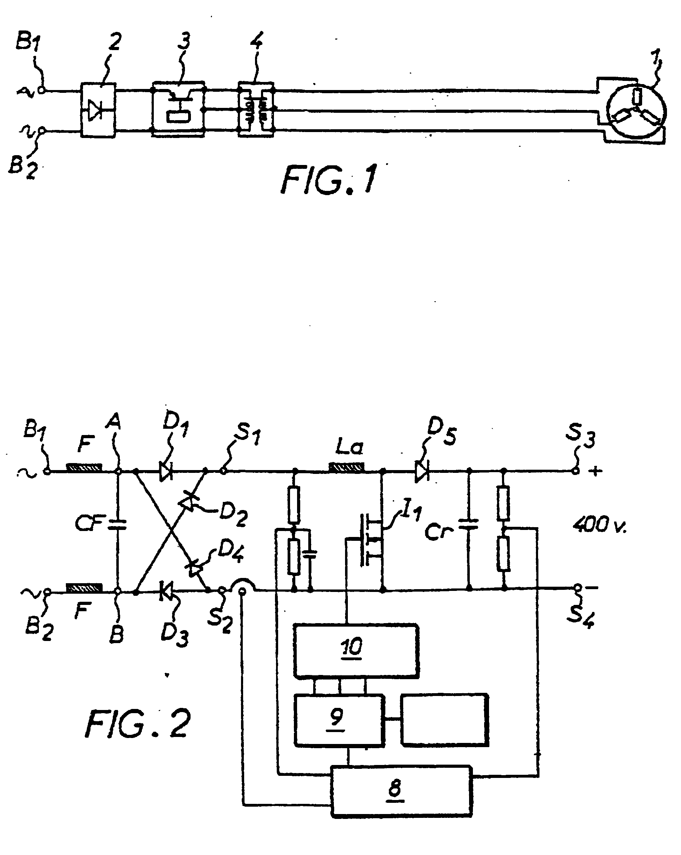

Dans ces exemples, l'aiguille vibrante 1 comprend un moteur électrique destiné à être alimenté par du courant alternatif triphasé à une très basse tension de sécurité de 24 volts et à une fréquence de 250 Hz. Une autre tension comprise dans la plage des valeurs de très basse tension de sécurité, c'est-à-dire n'excédant pas 50 volts en valeur efficace, pourrait être utilisée sans sortir du cadre de la présente invention. De même, la fréquence pourrait être comprise entre 200 et 400 Hz, puisqu'en utilisant cette fréquence de 400 Hz associée à un moteur comportant deux paires de pôles, la fréquence de vibration serait voisine de 12 000 Hz. Ce courant alternatif triphasé est, quant à lui, obtenu à partir d'une tension monophasée nominale 220 volts/50 Hz (pouvant varier de 85 à 260 V) délivrée par un réseau de distribution (bornes B₁, B₂), au moyen d'un circuit électronique comportant successivement, comme illustré sur la figure 1 :
- un circuit redresseur à correction du facteur de puissance CFP 2 utilisant un hacheur dont la fréquence de découpage se situe dans une plage comprise entre 10 kHz et 100 kHz ;
- un transformateur 4 apte à transformer la tension alternative délivrée par l'onduleur en une tension alternative secondaire de très basse tension de sécurité.

Le circuit redresseur à correction du facteur de puissance CFP peut comprendre, comme représenté figure 2 :
- un pont redresseur double alternance (diodes D₁ à D₄) dont les bornes d'entrée A, B sont connectées au réseau par l'intermédiaire d'un filtre simplifié en ⊂ (deux branches série, une branche en parallèle) comprenant deux bobines de filtrage F et un condensateur CF, ce filtre, très simplifié, servant à éliminer les faibles composantes haute fréquence engendrées par le découpage réalisé à l'étage suivant ;
- un hacheur comprenant un interrupteur commandable Ii tel qu'un transistor à effet de champ à gâchette isolée, monté entre les deux bornes de sortie S₁, S₂ du pont D₁ à D₄, en série avec une inductance de stockage La, cet interrupteur commandable I₁ comprenant une électrode de commande, par exemple une gâchette connectée à un circuit de commande ; et
- un circuit redresseur comprenant, de façon classique, entre les deux bornes de l'interrupteur I₁, une diode de redressement D₅ en série avec un condensateur Cr dont les deux bornes constituent les deux bornes de sortie S₃, S₄ du redresseur qui délivre ici une tension continue de 400 volts.

Le circuit de commande de l'interrupteur commandable Il comprend, quant à lui:
- un comparateur régulateur 8 qui compare des informations relatives à l'intensité et à la tension du courant délivré par le pont redresseur de courant D₁ à D₄ à des informations relatives à la tension de sortie du redresseur D₅, Cr;
- un circuit logique 9 piloté par une horloge, qui reçoit les informations résultant de la susdite comparaison et qui transmet un signal de commande à un interface de commande 10 connecté à l'électrode de commande de l'interrupteur I₁.

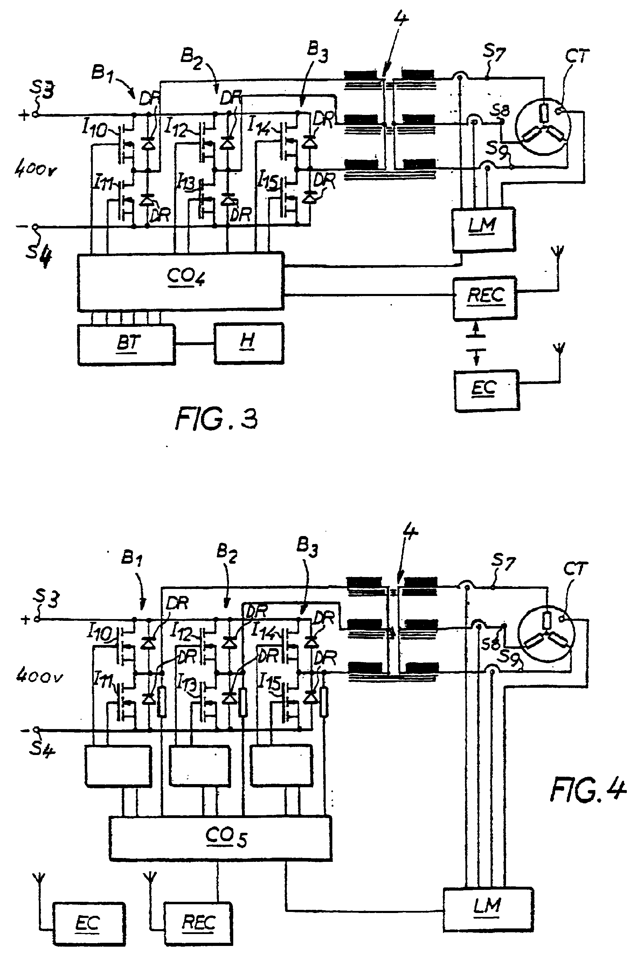

La conversion de la tension continue délivrée sur les bornes 3 et 4 par le redresseur 2 en une tension alternative peut être réalisée à l'aide de circuits onduleurs de type classique tels que, par exemple, les circuits représentés sur les figures 3 et 4 qui comprennent chacun un pont triphasé comportant trois branches B₁, B₂, B₃ montées en parallèle sur les bornes de sortie S3, S₄ du circuit redresseur 2, chacune de ces branches B₁ à B₃ comprenant deux interrupteurs commandables I₁₀, I₁₁ - I₁₂, I₁₃ - I₁₄, I₁₅ montés en série et dont le point de jonction est connecté à une sortie correspondante S₇, S₈, S₉ de l'onduleur par l'intermédiaire du transformateur basse fréquence 4.

De façon classique, chaque interrupteur commandable I₁₀ à I₁₅ est doublé par une diode de roue libre correspondante DR.

La commande des interrupteurs commandables I₁₀ à I₁₅ est assurée par un circuit de commande CO₄ recevant un signal engendré par une horloge H par l'intermédiaire d'une bascule triple BT. Ce circuit de commande CO₄ reçoit, par ailleurs, des informations en provenance, d'une part, d'un circuit logique à mémoire LM connecté à des capteurs mesurant l'intensité du courant circulant par les bornes de sortie S₇ à S₉ et à un capteur CT de température du moteur de l'aiguille vibrante ainsi que, d'autre part, d'un récepteur REC de télécommande marche-arrêt accordé à un émetteur de commande à distance EC.

Cette solution présente l'avantage d'obtenir des prix de revient moins importants. Dans l'onde délivrée par ce circuit, dite trois niveaux deux tiers/un tiers, les harmoniques de rang 3 et ses multiples sont absents, par contre sont présents les harmoniques de rang 5, 7, 11 et 13. Le taux global est de 29 %, ce qui peut entraîner des pertes supplémentaires dans la partie magnétique du moteur. Néanmoins, ce circuit permet difficilement d'obtenir un démarrage progressif du moteur.

Cet inconvénient peut être supprimé grâce au circuit représenté sur la figure 4 dans lequel la commande des interrupteurs commandables I₁₀ à I₁₅ de chacune des branches B₁ à B₃ s'effectue par un circuit de commande PWM à rapport V/F constant, par l'intermédiaire d'un interface correspondant. D'une façon analogue au précédent, le circuit de commande CO₅ reçoit des informations sur la tension et l'intensité du courant délivré par le transformateur basse fréquence 4 à chacune des bornes de sortie S₇, S₈, S₉ ainsi que sur la température du moteur via un circuit logique à mémoire LM. Ce circuit de commande CO₅ est, par ailleurs, raccordé à un circuit de télécommande REC - EC accordé à un émetteur de commande à distance.

Le taux global de distorsion de cet onduleur ne dépasse pas 5 % et un démarrage progressif peut être assuré. Pendant ce démarrage, le rapport de la tension et de la fréquence aux bornes du moteur est maintenu constant.

Dans ces exemples, les capteurs de courant et de température associés aux circuits logiques à mémoire LM assurent la protection de l'aiguille vibrante contre :
- les surcharges,
- l'absence d'une phase, par exemple suite à une détérioration du câble d'alimentation,
- la surchauffe due par exemple à un maintien en fonctionnement prolongé d'une aiguille hors du béton.

Les circuits logiques à mémoire LM sont conçus de manière à ce qu'après un déclenchement sur défaut, ils interdisent la remise en fonctionnement de l'aiguille vibrante, une validation devant être effectuée, après effacement du défaut pour permettre le redémarrage.

Avantageusement, l'émetteur de télécommande EC pourra être monté dans un petit boîtier, ou même être porté par l'utilisateur (par exemple fixé à la ceinture de celui-ci).

Outre les avantages techniques, cette disposition complète la protection individuelle en isolant totalement l'utilisateur des circuits électriques associés à l'aiguille.

En variante, un commutateur à contact momentané pourra être installé sur le boîtier assurant la liaison entre le câble de raccordement du coffret d'alimentation et la gaine de l'aiguille vibrante et pourra, par une liaison bifilaire avec le récepteur de télécommande, remplir la même fonction que le boîtier émetteur sans sortir du cadre de la présente invention.

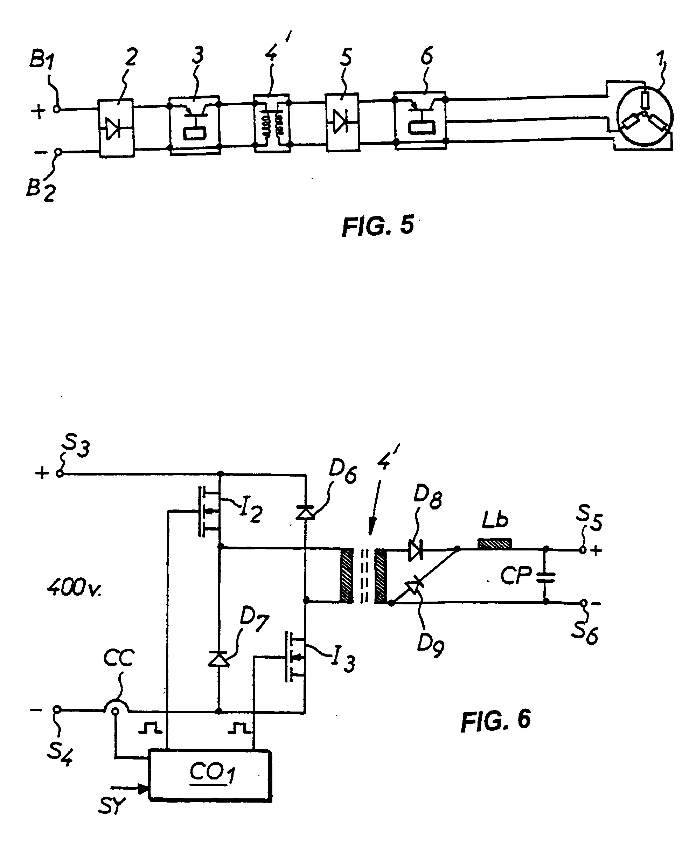

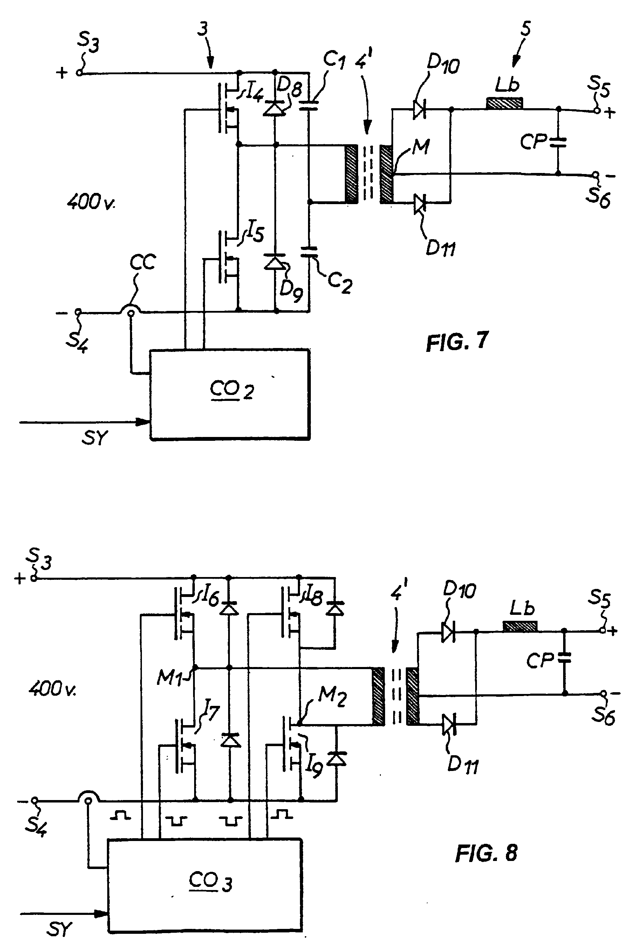

Dans l'exemple illustré sur les figures 5 et 8, le circuit électronique permettant d'obtenir le courant alternatif triphasé de 24 volts à partir de la tension monophasée du réseau, comporte successivement comme représenté figure 5 :
- un circuit redresseur à correction du facteur de puissance CFP 2' utilisant un hacheur dont la fréquence de découpage est de l'ordre de 100 kHz ;
- un convertisseur de type PWM 3 destiné à convertir la tension continue délivrée par le redresseur 2' en une tension alternative dont la fréquence est égale à la fréquence de découpage du circuit redresseur 2' ;
- un transformateur haute fréquence 4' apte à transformer la tension alternative délivrée par le convertisseur 3 en une tension alternative secondaire ;
- un redresseur 5 qui convertit cette tension alternative secondaire en une très basse tension continue de sécurité ;
- un onduleur 6 destiné à convertir cette très basse tension continue de sécurité en tension alternative triphasée de 24 volts/250 Hz servant à alimenter le moteur triphasé de l'aiguille vibrante.

Le circuit redresseur à correction du facteur de puissance CFP 2' peut consister en celui représenté figure 2 et ne sera donc pas décrit à nouveau.

Tel que représenté sur la figure 6, ce circuit convertisseur, de type "Forward", PWM comprend deux interrupteurs commandables I₂, I₃ assurant chacun la liaison entre une borne d'entrée E₁, E₂ et une borne correspondante du transformateur haute fréquence 4'. Ce convertisseur comprend en outre deux diodes de roue libre D₆, D₇ assurant la récupération de l'énergie et la démagnétisation du transformateur quand les interrupteurs I₂, I₃ sont ouverts.

La commande des interrupteurs I₂, I₃ est assurée de façon synchrone par un circuit de commande CO₁ recevant le signal de synchronisation SY émis par le circuit logique 9 ainsi qu'un signal représentatif de l'intensité du courant circulant dans le convertisseur qui émane d'un capteur de courant CC.

Dans cet exemple, l'enroulement secondaire du transformateur haute fréquence 4' est connecté à un circuit redresseur double alternance D₈, D₉ suivi d'un filtre en L comprenant, de façon classique, une inductance série Lb et un condensateur parallèle CP.

Dans l'exemple représenté sur la figure 7, le convertisseur de type à demi-pont PWM comprend deux interrupteurs commandables I₄, I₅ montés en série entre les deux bornes de sortie S₃, S₄ du redresseur.

Le point de jonction entre ces deux interrupteurs I₄, I₅ est connecté à l'une des deux bornes du circuit primaire du transformateur haute fréquence 4'.

L'autre borne du circuit primaire est connectée aux deux bornes S₃, S₄ de sortie du circuit redresseur 2 par l'intermédiaire de deux condensateurs respectifs C₁, C₂.

Par ailleurs, deux diodes de roue libre D₈, D₉ assurent la récupération de l'énergie et limitent la surtension sur les deux interrupteurs commandables I₄, I₅ quand ceux-ci commutent.

Les deux électrodes de commande des interrupteurs I₄, I₅ sont ici commandées en opposition de phase par un circuit de commande CO₂ recevant le signal de synchronisation SY émis par le circuit logique 9 et un signal représentatif de l'intensité du courant circulant dans le convertisseur 3 qui émane d'un capteur de courant CC.

Le circuit redresseur associé à l'enroulement secondaire du transformateur est un circuit demi-pont double alternance comportant deux diodes D₁₀, D₁₁ reliant les deux extrémités de l'enroulement à une première borne de sortie S₅ du redresseur 5, l'autre borne de sortie S₆ de ce redresseur 5 étant, quant à elle, connectée à un point médian M de l'enroulement secondaire du transformateur haute fréquence 4'. Les deux bornes de sortie du redresseur 5 sont connectées à un circuit de filtrage comportant, comme dans l'exemple précédent, une inductance Lb et un condensateur CP.

Le circuit convertisseur représenté en variante sur la figure 8 est de type PWM à pont complet. Il comprend deux circuits de commutation comprenant chacun deux interrupteurs commandables I₆, I₇ - I₈, I₉ montés en série, chacun de ces circuits de commutation reliant les deux bornes de sortie S₃, S₄ du redresseur 2.

Les deux bornes de l'enroulement primaire du transformateur sont respectivement connectées aux points de jonction M₁, M₂ des interrupteurs I₆, I₇ - I₈, I₉ des deux circuits de commutation. Des diodes de roue libre placées aux bornes des interrupteurs commandables I₆ à I₉ assurent la même fonction que celles qui sont prévues dans le circuit de la figure 4.

La commande des interrupteurs est assurée au moyen d'un circuit de commande de type classique CO₃ rythmé par le signal de synchronisation SY délivré par le circuit logique 9.

Le circuit redresseur connecté à l'enroulement secondaire du transformateur est ici identique à celui de la figure 7.

Comme précédemment mentionné, les circuits de conversion représentés sur les figures 6, 7 et 8 permettent de convertir, avec isolation galvanique, la tension continue délivrée par le redresseur 2 (par exemple une tension de l'ordre de 400 V) en une très basse tension de sécurité apte à être convertie en une très basse tension triphasée de sécurité (par exemple de l'ordre de 24 volts).

Les modes d'exécution illustrés sur les figures 7 et 8 (circuits hacheurs à demi-pont ou à pont complet) présentent, par rapport à la version "Forward" PWM de la figure 6, l'avantage de permettre, à puissance égale, de réduire la valeur de la bobine de filtrage Lb et donc son encombrement du fait que la fréquence de la composante alternative se trouve doublée par le redressement double alternance.

Ces deux modes d'exécution conviennent tout particulièrement pour les alimentations de puissance plus élevées, le coefficient d'utilisation du transformateur étant meilleur que dans la variante "Forward" PWM illustrée sur la figure 6.

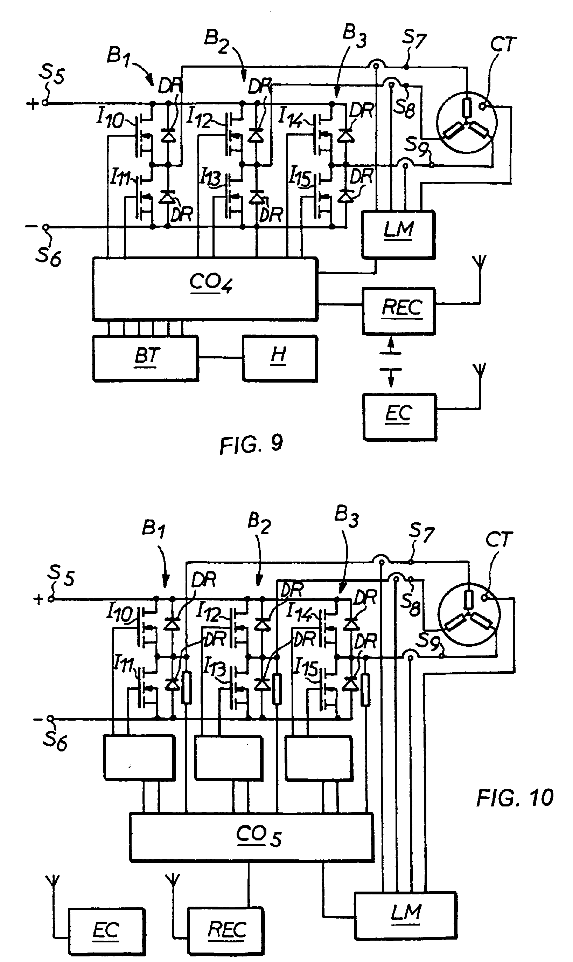

La conversion de la très basse tension continue de sécurité délivrée par les circuits de conversion représentés figures 6 à 8 en une très basse tension alternative de sécurité peut être réalisée à l'aide de circuits onduleurs de type classique tels que, par exemple, les circuits représentés sur les figures 9 et 10 qui présentent une structure sensiblement analogue à ceux représentés figures 3 et 4 : à la différence que dans ces deux circuits, les deux branches B₁ à B₃ du pont triphasé sont montées en parallèle sur les bornes de sortie S₅, S₆ du circuit 3, 4, 5 tandis que les points de jonction de ces branches B₁ à B₃ sont directement connectés aux bornes de sortie S₇, S₈, S₉, le transformateur 4 du circuit de la figure 3 étant supprimé. De la même façon, les sorties S7, S8, S9 sont connectés aux bornes d'alimentation du moteur.

En conséquence les éléments analogues figurant sur les figures 9 et 10 portent les mêmes références que ceux des figures 3 et 4.

Dans les exemples précédemment décrits, les interrupteurs commandables ont été représentés sous la forme de transistors à effet de champ MOSFET ou IGBT.

Il est clair que l'invention ne se limite pas à des interrupteurs de ce type : d'autres types d'interrupteurs commandables tels que, par exemple, des transistors à structure bipolaire pourraient être utilisés sans sortir du cadre de la présente invention.

## Revendications

1. Procédé pour l'alimentation, avec isolation galvanique d'un appareil électrique, notamment d'une aiguille vibrante en une très basse tension de sécurité, à partir d'une source de courant alternatif pouvant consister en le réseau de distribution électrique,
caractérisé en ce qu'il comprend les phases opératoires suivantes :
- le redressement de la tension alternative du réseau en une première tension continue au moyen d'un circuit redresseur à correction du facteur de puissance qui utilise un hacheur fonctionnant à une fréquence de découpage relativement élevée,
- la conversion de cette première tension continue en une tension alternative intermédiaire,
- la transformation de cette tension alternative intermédiaire en une très basse tension alternative de sécurité, apte à assurer l'alimentation de l'aiguille vibrante.

2. Procédé selon la revendication 1,
caractérisé en ce que la susdite conversion est effectuée par un onduleur, et en ce que la susdite transformation s'effectue à l'aide d'un transformateur.

3. Procédé selon la revendication 1,
caractérisé en ce que les susdites étapes de conversion et de transformation comprennent les opérations successives suivantes :
- le découpage de la susdite première tension continue de manière à obtenir une tension alternative intermédiaire à une fréquence égale à la susdite fréquence de découpage,
- la transformation de cette tension intermédiaire en une tension alternative secondaire dont le niveau correspond à celui d'une très basse tension de sécurité,
- le redressement de cette tension alternative secondaire en une très basse tension continue de sécurité,
- la conversion par un onduleur de cette très basse tension continue de sécurité en une très basse tension alternative de sécurité, apte à assurer l'alimentation de l'aiguille vibrante.

4. Procédé selon la revendication 3,
caractérisé en ce que la fréquence de découpage utilisée pour le redressement de la tension alternative de la source de même que la fréquence de la tension alternative intermédiaire sont de l'ordre de 100 kHz.

5. Procédé selon l'une des revendications 3 et 4,
caractérisé en ce que la susdite source délivre une tension alternative de fréquence 50 Hz pouvant varier de 85 à 260 V, et en ce que le susdit onduleur délivre une très basse tension triphasée de sécurité.

6. Procédé selon l'une des revendications 3 à 5,
caractérisé en ce que le redressement avec correction du facteur de puissance de la tension alternative de la source comprend successivement :
- un premier redressement de la tension de la source avec filtrage pour élimination des composantes haute fréquence,
- un découpage de la tension ainsi redressée à une fréquence relativement élevée de l'ordre de 100 kHz,
- un deuxième redressement de la tension issue de ce découpage pour obtenir une tension continue à un niveau relativement élevé, de l'ordre de 400 V.

7. Procédé selon l'une des revendications 3 à 6,
caractérisé en ce que la conversion de la susdite première tension continue en une tension alternative intermédiaire est assurée par un convertisseur de type "Forward" PWM, en demi-pont PWM ou en pont complet PWM synchronisé sur la susdite fréquence de découpage.

8. Procédé selon l'une des revendications 3 à 7,
caractérisé en ce que la tension alternative intermédiaire est transformée par un transformateur haute fréquence puis est redressée par un redresseur mono ou double alternance de manière à obtenir une très basse tension continue de sécurité.

9. Procédé selon l'une des revendications 3 à 8,
caractérisé en ce que la très basse tension continue de sécurité est transformée en une très basse tension alternative de sécurité au moyen d'un onduleur de type onde à trois niveaux un tiers/deux tiers ou de type PWM à commande rapport tension/fréquence constant.

10. Procédé selon l'une des revendications 3 à 9,
caractérisé en ce que la commande marche/arrêt est assurée au moyen d'une télécommande agissant sur le circuit de commande des interrupteurs commandables du pont de l'onduleur.

11. Dispositif pour l'alimentation avec isolation galvanique d'un appareil électrique, notamment d'une aiguille vibrante, en une très basse tension de sécurité, à partir d'une source de courant alternatif pouvant consister en le réseau de distribution électrique,
caractérisé en ce qu'il comprend un circuit redresseur à correcteur du facteur de puissance CPF (2) utilisant un hacheur haute fréquence qui effectue le redressement de la tension alternative du réseau en une première tension continue et un circuit de conversion comportant des moyens de conversion de ladite première tension continue en une tension alternative intermédiaire et des seconds moyens de conversion aptes à convertir cette tension alternative intermédiaire en une très basse tension alternative triphasée de sécurité apte à assurer l'alimentation de l'aiguille vibrante.

12. Dispositif selon la revendication 11,
caractérisé en ce que les susdits premiers moyens de conversion comprennent un onduleur.

13. Dispositif selon la revendication 12,
caractérisé en ce que les susdits seconds moyens de conversion consistent en un transformateur, et en ce que le susdit circuit de conversion comprend :
- un convertisseur de type PWM (3) destiné à convertir la tension continue délivrée par le redresseur (2) en une tension alternative dont la fréquence est égale à la fréquence de découpage du circuit redresseur (2),
- un transformateur haute fréquence (4') apte à transformer la tension alternative délivrée par ledit convertisseur (3) en une tension alternative secondaire,
- un redresseur (5) qui convertit ladite tension alternative secondaire en une très basse tension continue de sécurité, et
- un onduleur (6) destiné à convertir cette très basse tension continue de sécurité en une tension alternative apte à alimenter l'appareil.

14. Dispositif selon l'une des revendications 11 à 13,
caractérisé en ce que le redresseur à correction du facteur de puissance comprend :
- un pont redresseur double alternance (diodes D₁ à D₄) dont les bornes d'entrée (A, B) sont connectées au réseau par l'intermédiaire d'un filtre simplifié en c (deux branches série, une branche en parallèle) comprenant deux bobines de filtrage (F) et un condensateur (CF), ce filtre, très simplifié, servant à éliminer les faibles composantes haute fréquence engendrées par le découpage à 100 kHz réalisé à l'étage suivant ;
- un hacheur comprenant un interrupteur commandable (I₁) monté entre les deux bornes de sortie du susdit pont (D₁ à D₄), en série avec une inductance de stockage (La), cet interrupteur commandable comprenant une électrode de commande connectée à un circuit de commande ; et
- un circuit redresseur comprenant, de façon classique, entre les bornes de l'interrupteur (I₁), une diode de redressement, en série avec un condensateur (C₂) dont les deux bornes constituent les deux bornes de sortie (S₃, S₄) du redresseur.

15. Dispositif selon les revendications 13 et 14,
caractérisé en ce que la tension continue délivrée sur les bornes (S₃, S₄) par le redresseur (2) est appliquée à un circuit convertisseur continu/alternatif (3) de type "Forward" PWM, demi-pont PWM ou à pont complet PWM qui débite sur l'enroulement primaire du transformateur (4'), la commande des interrupteurs commandables de ce circuit convertisseur étant assurée par un circuit de commande (CO₁ à CO₃) recevant un signal de synchronisation (SY) émanant du redresseur à correction du facteur de puissance.

16. Dispositif selon la revendication 15,
caractérisé en ce que l'enroulement secondaire du transformateur est connecté à un circuit redresseur double alternance, éventuellement en demi-pont ou en pont, suivi d'un filtre incluant une inductance série et un condensateur parallèle.

17. Dispositif selon l'une des revendications 13 à 16,
caractérisé en ce que le susdit onduleur de type onde trois niveaux un tiers-deux tiers ou PWM comprend un pont triphasé dont les interrupteurs commandables sont pilotés par un circuit électronique de commande couplé à un système de télécommande marche-arrêt.

18. Dispositif selon la revendication 17,
caractérisé en ce que le susdit circuit électronique de commande est en outre couplé à un circuit logique à mémoire recevant des informations sur l'intensité et/ou la tension de sortie de l'onduleur et/ou la température du susdit appareil.
